# EUROPÄISCHE PATENTSCHRIFT

(11) **EP 1 598 574 B1**
(45) Veröffentlichungstag und Bekanntmachung des Hinweises auf die Patenterteilung: **11.02.2009**
(21) Anmeldenummer: 05010086.6
(22) Anmeldetag: 10.05.2005
(51) Int. Cl.: F16F 15/134

(54) **Abstützelement**
Support element
Eléments d'appui

(30) Priorität: 19.05.2004 DE 102004024739
(43) Veröffentlichungstag der Anmeldung: 23.11.2005
(73) Patentinhaber: ZF Friedrichshafen AG, 88046 Friedrichshafen (DE)
(72) Erfinder: Dögel, Thomas, 97688 Bad Kissingen (DE); Kister, Igor, 97080 Würzburg (DE)

(56) Entgegenhaltungen:
- EP-A- 0 238 231
- DE-A1- 2 823 894
- DE-A1- 10 023 113
- DE-A1- 10 241 879
- DE-A1- 19 751 029
- DE-A1-9102004 006 87

## Beschreibung

Die vorliegende Erfindung betrifft ein Abstützelement zur Abstützung eines elastisch verformbaren Dämpferelements einer Dämpferelementenanordnung eines Torsionsschwingungsdämpfers an einer Primärseite oder/und einer Sekundärseite des Torsionsschwingungsdämpfers oder an einem weiteren elastisch verformbaren Dämpferelement, umfassend eine Rollenanordnung, welche an einem Abstützelementenkörper getragen ist und an einer Abstützfläche des Torsionsschwingungsdämpfers bewegbar ist.

Die DE 102 41 879 A1 zeigt insbesondere in den Fig. 1 und 2 einen derartigen Torsionsschwingungsdämpfer. Dieser umfasst eine Primärseite, die mit einem ersten Deckscheibenelement an einer nicht gezeigten Antriebswelle, beispielsweise einer Kurbelwelle, festgelegt sein kann, und somit mit dieser um eine Drehachse drehbar ist. Mit einem radial äußeren Abschnitt des ersten Deckscheibenelements ist ein zweites Deckscheibenelement fest verbunden. Die beiden Deckscheibenelemente begrenzen radial außen einen Raumbereich, in dem die Dämpferelemente, im Allgemeinen Schraubendruckfedern, einer Dämpferelementenanordnung aufgenommen sind.

Der Torsionsschwingungsdämpfer umfasst ferner eine Sekundärseite. Diese weist ein Zentralscheibenelement auf, das zwischen den beiden Deckscheibenelementen positioniert ist und mit seinem radial äußeren Bereich in den Raumbereich eingreift. Radial innerhalb des Deckscheibenelements ist das Zentralscheibenelement mit einem Schwungmasseteil fest verbunden, welches dazu dient, eine Reibungskupplung einer Druckplattenbaugruppe aufzunehmen.

Die Dämpferelemente der Dämpferelementenanordnung stützen sich in Umfangsrichtung an der Primärseite, also. den Deckscheibenelementen, sowie an der Sekundärseite, also an nach radial außen greifenden Armabschnitten des Zentralscheibenelements, ab. Auf diese Weise wird eine Umfangsdrehbewegung der Sekundärseite bezüglich der Primärseite unter Kompression der Dämpferelemente gegen deren Rückstellwirkung möglich.

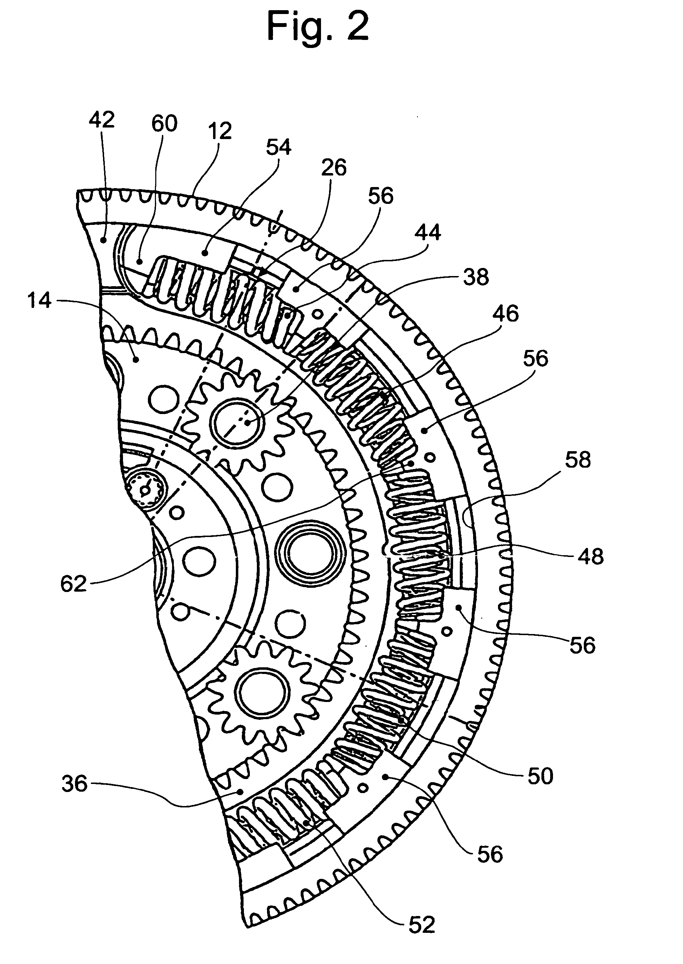

Man erkennt in Fig. 2, dass sich die Dämpferelementenanordnung jeweils fast über einen Winkelbereich von 180° erstreckt, und nach radial außen über Abstützelemente. an einer Abstützfläche der Primärseite abgestützt ist. Zur Befestigung an der jeweiligen Dämpferelementenanordnung greifen die Abstützelemente über jeweilige, nach radial innen ragende Abstützvorsprünge an je einer Windung der Dämpferelementenanordnung an. Da die Abstützungen jeweils über einen Wälzelementenkäfig an ihrer der Abstützfläche zugewandten Seite verfügen, können die Abstützungen bei Einleitung von Bewegungen in Umfangsrichtung wenigstens entlang eines vorbestimmten Winkelbereiches zumindest im wesentlichen reibungsfrei bewegt werden, und ermöglichen dadurch eine nahezu von Reibung befreite Kompression der Dämpferelementenanordnung, was eine hohe Entkopplungsgüte zur Folge hat. Dieser Vorteil bleibt auch unter Einwirkung der im Drehbetrieb auftretenden Fliehkräfte, unter welchen die Abstützungen mit zunehmender Drehzahl und entsprechend zunehmender Fliehkraft verstärkt gegen die Abstützfläche gepresst werden, erhalten, muss bei der bekannten Anordnung allerdings aufgrund der Ausbildung der Abstützungen jeweils mit einem Wälzkörperkäfig sowie mit einer Mehrzahl in demselben aufgenommenen Wälzkörpern mit einem erheblichen konstruktiven Aufwand und finanziellen Aufwand erkauft werden.

Um diesen Aufwand zu reduzieren, ist es aus der DE 197 51 029 A1 bekannt, die Abstützelemente mit Rollelementen zu versehen, die in Rollkontakt mit der Abstützfläche stehen. Die Rollelemente sind mit einem Achsabschnitt an einem Abstützelementenkörper der Abstützelemente drehbar getragen und rollen dann mit einem mit dem Achsabschnitt integral ausgebildeten Rollabschnitt an der Abstützfläche ab.

Bei einer derartigen Ausgestaltung der Abstützelemente besteht grundsätzlich das Problem, dass im Bereich der an den Abstützelementenkörpern getragenen Achsen gleichwohl eine Gleitreibung auftritt, nämlich an den Abstützelementenkörpern selbst. Weiterhin sind diese Abstützelementenkörper im Allgemeinen aus Kunststoff aufgebaut, was zu dem Problem führt, dass mit zunehmender Drehzahl eine zunehmende Belastung im Bereich der Wechselwirkung zwischen Abstützelementenkörpern und Rollen auftritt. Auch weisen derartige Abstützelemente das Problem auf, dass sie vergleichsweise stark verschmutzen können und somit die Rollcharakteristik weiter beeinträchtigt werden kann.

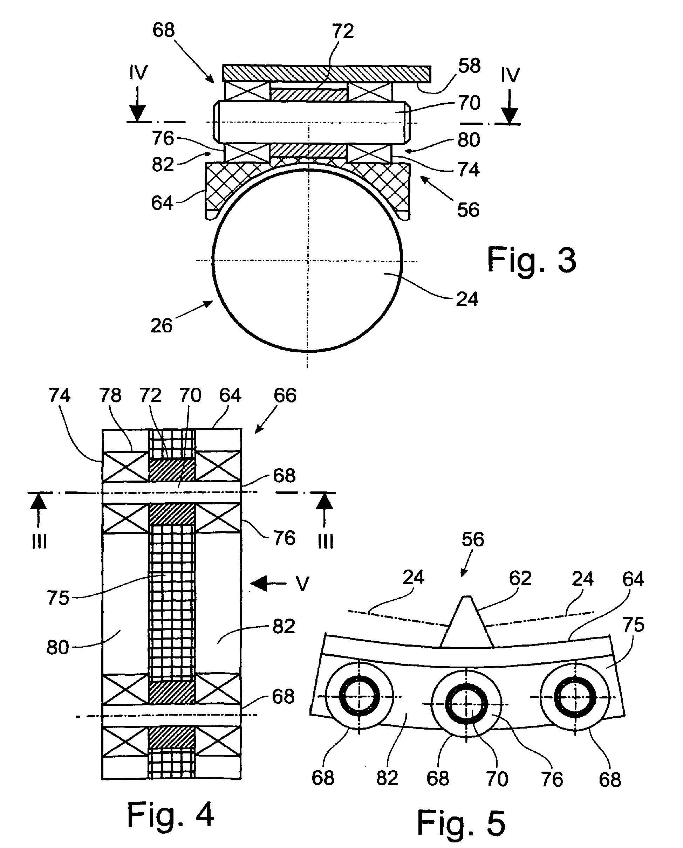

Die gleiche Problematik tritt bei aus der EP 0 238 231 A2 bekannten Abstützelementen eines Torsionsschwingungsdämpfers auf. Wie insbesondere eine in Fig. 3 ersichtliche Schnittdarstellung erkennen lässt, ist eine Rollenanordnung an einem Abstützelementenkörper getragen, und gegenüber einer Abstützfläche des Torsionsschwingungsdämpfers bewegbar. Die Rollenanordnung wird durch wenigstens ein Rollorgan gebildet, das in jeweils einem Trageelement des Abstützelementenkörpers aufgenommen ist, und das jeweils über eine Achse verfügt.

Es ist die Aufgabe der vorliegenden Erfindung, ein Abstützelement für einen Torsionsschwingungsdämpfer vorzusehen, bei welchem keine Gleitreibung bei der Bewegung entlang der Abstützfläche erzeugt wird.

Bei der vorliegenden Erfindung wird diese Aufgabe gelöst durch ein Abstützelement zur Abstützung eines elastisch verformbaren Dämpferelements einer Dämpferelementenanordnung eines Torsionsschwingungsdämpfers an einer Primärseite oder/und einer Sekundärseite des Torsionsschwingungsdämpfers oder an einem weiteren elastisch verformbaren Dämpferelement, umfassend eine Rollenanordnung, welche an einem Abstützelementenkörper getragen ist und an einer Abstützfläche des Torsionsschwingungsdämpfers bewegbar ist, wobei die Rollenanordnung wenigstens ein über wenigstens ein Trageelement an dem Abstützelementenkörper getragenes Rollorgan umfasst, das eine Achse und wenigstens ein Rolllager aufweist.

Bei diesem erfindungsgemäßen Abstützelement ist also kein direkter Kontakt der Rollorgane mit den Abstützelementenkörpern vorhanden, sondern es sind für eine größere Verteilung der Belastung sorgende Trageelemente vorhanden. Die fliehkraftbedingt auftretenden Belastungen insbesondere des Abstützelementenkörpers können somit gemindert werden.

Durch das Bereitstellen eines Rolllagers wird bei der Bewegung eines Abstützelements entlang der Abstützfäche keine Gleitreibung erzeugt, sondern eine deutlich geringere Rollreibung.

Bei einer bevorzugten Ausgestaltungsform kann vorgesehen sein, dass die Achse des wenigstens einen Rollorgans an dem Abstützelementenkörper über das wenigstens eine Trageelement getragen ist und dass ein Lageraußenring des wenigstens einen Rolllagers zur Bewegung an der Abstützfläche ausgebildet ist.

Alternativ ist es möglich, dass ein Lageraußenring des wenigstens einen Rolllagers an dem Abstützelementenkörper über das wenigstens eine Trageelement getragen ist und dass die Achse zur Bewegung an der Abstützfläche ausgebildet ist.

Selbstverständlich ist es bei einer baulich sehr einfachen Ausgestaltungsform möglich, dass ein Trageelement mehreren Rollorganen zugeordnet ist.

Die vorliegende Erfindung wird nachfolgend mit Bezug auf die beiliegenden Zeichnungen detailliert erläutert. Es zeigt:
- Fig. 1: eine Teil-Längsschnittansicht eines Torsionsschwingungsdämpfers;
- Fig. 2: eine Teil-Axialansicht des in Fig. 1 gezeigten Torsionsschwingungsdämpfers;
- Fig. 3: eine Schnittansicht eines erfindungsgemäß ausgestalteten Abstützelements, geschnitten längs einer Linie III-III in Fig. 4;
- Fig. 4: eine Schnittansicht des in Fig. 3 gezeigten Abstützelements, geschnitten längs einer Linie IV-IV in Fig. 3;
- Fig. 5: eine Seitenansicht des in den Fig. 3 und 4 gezeigten Abstützelements in Blickrichtung V in Fig. 4;
- Fig. 6: eine der Fig. 3 entsprechende Ansicht eines alternativ ausgestalteten erfindungsgemäßen Abstützelements;
- Fig. 7: eine Schnittansicht des in Fig. 6 gezeigten Abstützelements, geschnitten längs einer Linie VII-VII in Fig. 6;
- Fig. 8: eine der Fig. 7 entsprechende Ansicht einer abgewandelten Ausgestaltungsform;
- Fig. 9: eine weitere der Fig. 7 entsprechende Ansicht einer abgewandelten Ausgestaltungsform;
- Fig. 10: eine weitere der Fig. 7 entsprechende Ansicht einer abgewandelten Ausgestaltungsform.

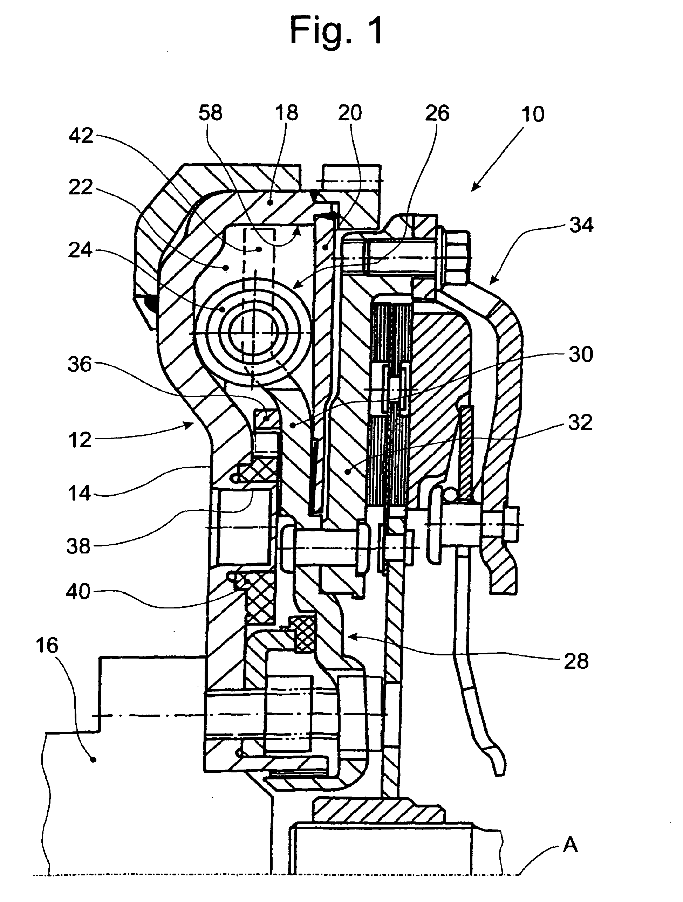

Die Fig. 1 und 2 zeigen einen derartigen Torsionsschwingungsdämpfer 10. Dieser umfasst eine Primärseite 12, die mit einem ersten Deckscheibenelement 14 an einer Antriebswelle 16, beispielsweise Kurbelwelle, festgelegt ist und somit mit dieser um eine Drehachse A drehbar ist. Mit einem radial äußeren, sich näherungsweise axial erstreckenden Abschnitt 18 des ersten Deckscheibenelements 14 ist ein zweites Deckscheibenelement 20 fest verbunden. Die beiden Deckscheibenelemente 14 und 20 begrenzen radial außen einen Raumbereich 22, in dem die Dämpferelemente 24, im Allgemeinen Schraubendruckfedern, einer Dämpferelementenanordnung 26 aufgenommen sind.

Der Torsionsschwingungsdämpfer 10 umfasst ferner eine Sekundärseite 28. Diese weist ein Zentralscheibenelement 30 auf, das zwischen den beiden Deckscheibenelementen 14, 20 positioniert ist und mit seinem radial äußeren Bereich in den Raumbereich 22 eingreift. Radial innerhalb des Deckscheibenelements 20 ist das Zentralscheibenelement 30 mit einem Schwungmasseteil 32 fest verbunden, welches wiederum zum Bereitstellen einer Reibungskupplung mit einer Druckplattenbaugruppe 34 gekoppelt ist. Am Zentralscheibenelement 30 ist weiterhin entweder als separates Bauteil vorgesehen oder integral angeformt eine hohlradartige Verzahnung 36, die mit mehreren an Vorsprüngen 38 des Deckscheibenelements 14 drehbar getragenen Planetenrädern 40 in Kämmeingriff steht.

Die Dämpferelemente 24 der Dämpferelementenanordnung 26 stützen sich in Umfangsrichtung über nachfolgend mit Bezug auf die Fig. 2 noch detailliert beschriebene Abstützelemente an der Primärseite 12, d. h. den Deckscheibenelementen 14, 20, sowie an der Sekundärseite 28, d. h. an nach radial außen greifenden Armabschnitten 42 des Zentralscheibenelements 30, ab. Auf diese Art und Weise wird eine Umfangsdrehbewegung der Sekundärseite 28 bezüglich der Primärseite 12 unter Kompression der Dämpferelemente 24, d. h. gegen deren Rückstellwirkung, möglich.

Man erkennt in Fig. 2, dass die Dämpferelementenanordnung 26 zwei Gruppen von in Umfangsrichtung aufeinander folgenden Dämpferfedern 44, 46, 48, 50 und 52 umfasst. Die beiden Gruppen erstrecken sich jeweils fast über einen Winkelbereich von 180° und sind in ihren Umfangsendbereichen, also an den Federn 44 und 52, über auch als Federteller bezeichnete Abstützelemente 54 an den Armabschnitten 42 des Zentralscheibenelements 30 bzw. an der Primärseite 12 in Umfangsrichtung abgestützt. Die einzelnen Federn der Federgruppen sind bezüglich einander in Umfangsrichtung bzw. näherungsweise in Umfangsrichtung über weitere Abstützelemente 56 abgestützt, die allgemein auch als Gleitschuhe bezeichnet werden. Zur Abstützung der Federn der Dämpferelementenanordnung 26 weisen sowohl die Abstützelemente 54 als auch die Abstützelemente 56 jeweilige nach radial innen greifende Abstützvorsprünge 60, 62 auf.

Sowohl die Abstützelemente 54, also die Federteller, als auch die Abstützelemente 56, also die Gleitschuhe, stützen sich nach radial außen hin an einer in Umfangsrichtung sich erstreckenden Abstützfläche 58 an dem näherungsweise axial sich erstreckenden Abschnitt 18 des Deckscheibenelements 14 ab. Auf diese Art und Weise kann eine gleitende oder reibende Abstützung der einzelnen Federn 44, 46, 48, 50, 52 vermieden werden, obgleich Federgruppen mit sehr großer Umfangserstreckung bereitgestellt werden können. Es sei hier darauf hingewiesen, dass, wie in der Fig. 2 deutlich wird, die einzelnen Federn in den Federgruppen zueinander unterschiedlich ausgebildet sein können, so dass in die einzelnen Federgruppen verschiedene Dämpfungscharakteristiken integriert werden können. Auch können ineinander geschachtelte Federn vorgesehen sein.

Durch die im Drehbetrieb auftretenden Fliehkräfte werden mit zunehmender Drehzahl und entsprechend zunehmender Fliehkraft die Abstützelemente 54 und 56 verstärkt gegen die Abstützfläche 58 gepresst.

Bevor im Folgenden mit Bezug auf die Fig. 3 bis 5 eine erste Ausgestaltungsform eines erfindungsgemäßen Abstützelements beschrieben wird, sei darauf hingewiesen, dass dieses beispielsweise bei einem Torsionsschwingungsdämpfer bzw. Zwei-Massen-Schwungrad eingesetzt werden kann, wie in den Fig. 1 und 2 dargestellt und mit Bezug auf diese Figuren beschrieben. Das heißt, das Abstützelement kann anstelle eines der Abstützelemente 56 eingesetzt werden, die zwischen den einzelnen Federn der Dämpferelementenanordnung 26 liegen. Selbstverständlich kann der nachfolgend beschriebene Aufbau eines Abstützelements auch bei dem an den Enden der Gruppen von Dämpferelementen 24 liegenden Abstützelemente 54 eingesetzt werden.

Das beispielsweise in Fig. 3 erkennbare Abstützelement 56 umfasst einen aus Kunststoffmaterial gefertigten Abstützelementenkörper 64, der auch den nach radial innen reichenden Vorsprung 62 für die in Fig. 5 nur schematisch angedeuteten Dämpferelemente 24 aufweist. Der Abstützelementenkörper 64 ist in Umfangsrichtung, also in der Bewegungsrichtung, in welcher dieser sich entlang der Abstützfläche 58 an der Primärseite 12 bewegen wird, langgestreckt. An dem Abstützelementenkörper ist eine allgemein mit 66 bezeichnete Rollenanordnung vorgesehen. Diese umfasst im Beispiel der Fig. 4 zwei in Abstand zueinander am Abstützelementenkörper 64 vorgesehene Rollorgane 68, die grundsätzlich von gleichem Aufbau sind. Es sei darauf hingewiesen, dass in Fig. 5 ein Beispiel eines Abstützelements 56 mit drei derartigen Rollorganen 68 gezeigt ist.

Jedes dieser Rollorgane 68 umfasst eine Achse 70, die über ein hülsenartiges Trageelement 72 am Abstützelementenkörper 64 getragen ist.

Das Trageelement 72 eines jeweiligen Rollorgans 68 ist vorzugsweise aus Hartstahl gefertigt und an dem Abstützelementenkörper 64 beispielsweise durch Einklemmen in einer zugeordneten Aussparung fest getragen. Die Achse 70 wiederum kann an dem zugeordneten Trageelement 72 fest, d. h. nicht drehbar getragen sein.

Die Achse 70 ragt an beiden Seiten, also in der Ansicht der Fig. 1 in Richtung der Drehachse A, über einen zentralen Stegabschnitt 75 des Abstützelementenkörpers 64 hinaus, an bzw. in welchem auch die Trageelemente 72 der jeweiligen Rollorgane 68 gehalten sind.

An den beiden über den zentralen Stegabschnitt 75 greifenden Abschnitten der Achsen 70 sind jeweils Rolllager 74, 76 vorgesehen bzw. getragen. Jedes dieser Rolllager umfasst einen nur schematisch in Fig. 4 angedeuteten Lageraußenring 78, der über eine Mehrzahl von Wälzkörpern, beispielsweise Kugeln, Tonnen, Nadeln oder dergleichen auf einem Lagerinnenring oder direkt der zugeordneten Achse 70 getragen ist. Die Lageraußenringe 78 sind somit unter Durchführung einer Abrollbewegung der Wälzkörper an den Achsen 70 drehbar getragen. Wie man weiter in Fig. 3 und in Fig. 5 erkennt, ist die Dimensionierung der Rolllager so, dass sie über den zentralen Stegabschnitt 74 bzw. über die in diesem gehaltenen Trageelemente 72 hervorstehen und somit in Kontakt mit der Abstützfläche 58 kommen können.

Man erkennt weiter in den Fig. 3 und 4, dass beidseits des zentralen Stegabschnitts 75 in dem Abstützelementenkörper 64 sich über dessen gesamte Länge erstreckende Aussparungen 80, 82 gebildet sind. Diese Aussparungen, in welchen im Wesentlichen auch die Rolllager 74, 76 aufgenommen sind, bilden durchgehende, also über die gesamte Länge der jeweiligen Abstützelemente 56 sich erstreckende Öffnungen bzw. Kanäle, welche das Auftreten von Partikelansammlungen insbesondere im Bereich der Rollorgane 68 dadurch verhindern, dass derartige Partikel sich ohne größere Hindernisse wieder aus dem Bereich der Abstützelemente 56 herausbewegen können.

Durch den Einsatz eines derartigen oder mehrerer derartiger Abstützelemente 56, wie in den Fig. 3 bis 5 gezeigt, werden im Betrieb verschiedene Vorteile erreicht. Zunächst mindert der Einsatz von Rolllagern 74, 76 die bei der Bewegung der Abstützelemente 56 entlang der Abstützfläche 58 auftretenden Reibkräfte, da im Wesentlichen eine Abrollbewegung, nämlich der Wälzkörper, auftreten wird und nicht eine Gleitbewegung. Weiterhin sorgen die über die gesamte Länge der Abstützelemente 56 sich erstreckenden Aussparungen 80, 82 dafür, dass keine Schmutz- oder Partikelansammlungen entstehen, die ebenfalls die Bewegung der Abstützelemente 56 beeinträchtigen könnten. Schließlich wird die Belastung insbesondere der Abstützelementenkörper 64 dadurch gemindert, dass die Rollorgane 68 nicht unmittelbar an den aus Kunststoff gebildeten Abstützelementenkörpern 64 getragen sind, sondern über die beispielsweise aus Hartstahl oder sonstigem Metallmaterial aufgebauten Trageelemente 72. Diese weisen jedoch, wie vor allem in Fig. 4 erkennbar, einen deutlich größeren Außenumfang auf als die Achsen 70 und verteilen somit die auftretenden Kräfte auf eine deutlich größere Oberfläche am Abstützelementenkörper 64.

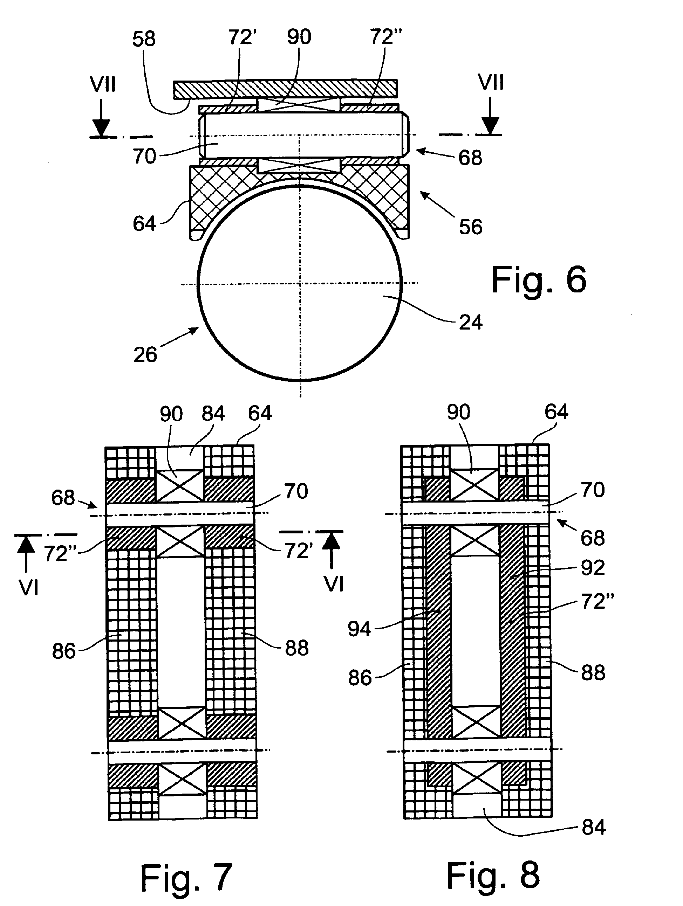

Eine abgewandelte Ausgestaltungsvariante ist in den Fig. 6 und 7 gezeigt. Man erkennt hier, dass am Abstützelementenkörper 64 kein zentraler Stegabschnitt vorhanden ist, sondern eine zentrale Aussparung 84, die beidseits begrenzt ist durch seitliche Stegabschnitte 86, 88. Die Achsen 70 der Rollorgane 68 sind in ihren beiden seitlichen Endbereichen nunmehr jeweils über Trageelemente 72', 72" an diesen seitlichen Stegabschnitten 86, 88 getragen. Zwischen den Stegabschnitten 86, 88 weist jedes Rollorgan 68 wieder ein Rolllager 90 auf, das nunmehr zentral angeordnet ist und, wie in Fig. 6 erkennbar, über die Stegabschnitte 86, 88 hervorsteht und somit in Rollkontakt mit der Abstützfläche 58 gelangen kann.

Neben dem Vorteil, dass auch hier eine in Längsrichtung der Abstützelementenkörper 64 durchgehende Aussparung 84 vorhanden ist, wird die Belastung der Abstützelementenkörper 64 dadurch weiter gemindert, dass die Abstützung der einzelnen Rollorgane 68 nunmehr über zwei diesen jeweils zugeordnete Trageelemente 72', 72" erfolgt. Da bei dieser Ausgestaltungsvariante weiterhin die Rolllager 90 der einzelnen Rollorgane 68 seitlich weitestgehend durch die Stegabschnitte 86, 88 und die Trageelemente 72', 72" überdeckt sind, ist auch dann, wenn diese nicht gekapselt ausgestaltet sind, die Gefahr, dass die Rolllager 90 zu stark verschmutzen, deutlich gemindert.

In Fig. 8 ist eine weitere Abwandlung der in den Fig. 6 und 7 dargestellten Ausgestaltungsform gezeigt. Hier ist ein einziges, beispielsweise mit U-Form ausgestaltetes Trageelement 72"' vorhanden. Dieses trägt mit jeweiligen seitlichen Wandungsbereichen 92, 94 die Achsen 70 der Rollorgane 68 und ist in entsprechende Aussparungen des Abstützelementenkörpers 64 bzw. der seitlichen Stegabschnitte 86, 88 eingesetzt und darin beispielsweise unter Klemmwirkung gehalten. Selbstverständlich ist es auch möglich, die verschiedenen vorangehend auch bereits erwähnten Trageelemente 72, 72', 72" und 72"' bereits beim Gießvorgang der Trageelementenkörper 64 dort mit einzubauen.

Während bei der Ausgestaltungsform gemäß den Fig. 3 bis 5 durch Vorsehen von jeweils zwei Rolliagern 74, 76 an den Rollorganen 68 eine verbesserte Führung bzw. Abstützung der Abstützelemente 56 an der zugeordneten Abstützfläche 58 gewährleistet wird, weisen die in den Fig. 6 bis 8 dargestellten Ausgestalungsvarianten den Vorteil einer geringeren Flächenbelastung der Abstützelementenkörper 64 auf. Allen Ausgestaltungsformen ist jedoch gemeinsam der Vorteil der Abrollbewegung ohne wesentliche Gleitbewegungsanteile und der Vorteil der durchgehenden Aussparung oder durchgehenden Aussparungen zum Vermindern der Gefahr von Schmutzansammlungen. Insbesondere bei der Ausgestaltungsvariante gemäß den Fig. 3 bis 5 kann durch den Einsatz gekapselter Rolllager 74, 76 die Gefahr des Eintretens von Verunreinigungen in den Bereich der Rollager 74, 76 selbst weiter gemindert werden.

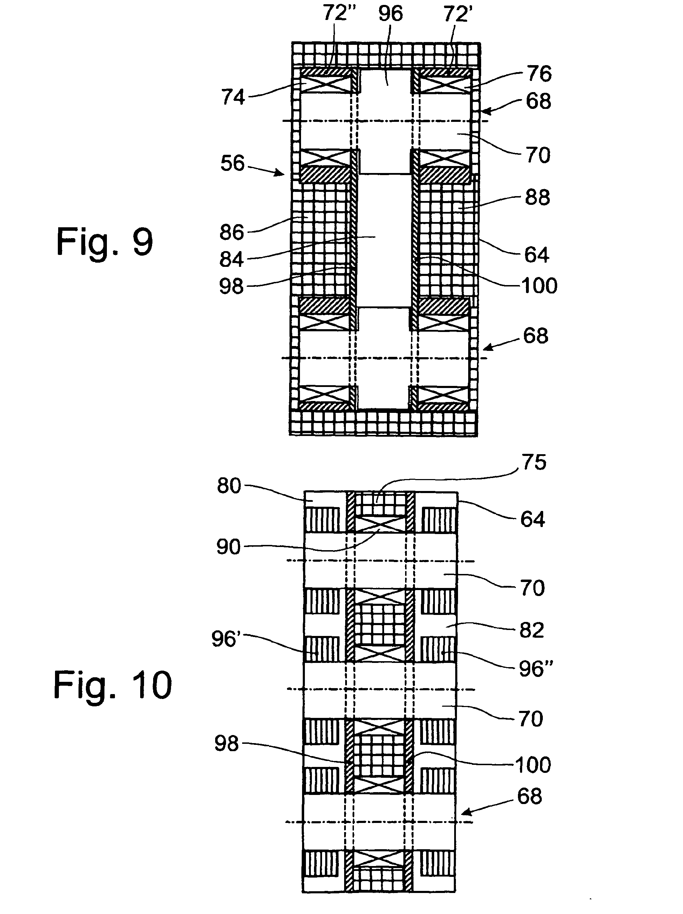

Eine weitere Abwandlung ist in Fig. 9 gezeigt. Man erkennt hier, dass die Achsen 70 der Rollorgane 68 in ihren seitlichen Endbereichen, also den im Bereich der Stegabschnitte 86, 88 liegenden Bereichen, nunmehr über die Rolllager 74, 76 am Abstützelementenkörper 64 getragen sind. Dabei sind die Rolllager 74, 76 nunmehr in die buchsen- oder hülsenartig ausgestalteten Trageelemente 72', 72" eingesetzt und über diese am Abstützelementenkörper 64 getragen. Die Lageraußenringe der Rolllager 74, 76 sind somit fest und im Wesentlichen undrehbar am Abstützelementenkörper 64 getragen, während nunmehr die Achsen 70 drehbar sind und mit einem im Bereich der Aussparung 84 liegenden, radial erweiterten Rollbereich 96 über den Abstützelementenkörper 64 zum Kontakt mit der Abstützfläche 58 hervorstehen. Die Dimensionierung des Rollbereichs 96 kann derart sein, dass die Rolllager 74, 76 vollständig von den Trageelementen 72" und 72' umkapselt sein können. Auch das außerhalb der Achsen 70 sich noch befindende Material der Stegabschnitte 86, 88 trägt zur Abkapselung der Rolllager 74, 76 bei. An der zur Aussparung 84 liegenden Seite können die Rolllager 74, 76 durch plattenartige Abdeckelemente 98, 100 abgedeckt sein, so dass auf diese Art und Weise eine vollständige Umkapselung der Rolllager 74, 76 erlangt werden kann.

Bei der in Fig. 10 gezeigten Ausgestaltungsvariante weist der Abstützelementenkörper 64 wiederum den zentralen Stegabschnitt 74 und beidseits davon die Aussparungen 80, 82 auf. An den Achsen 70 der Rollorgane 68 ist wieder ein zentrales Rolllager 90 vorgesehen, das bei dieser Ausgestaltungsvariante direkt am Abstützelementenkörper getragen ist, selbstverständlich aber auch über die vorangehend beschriebenen Trageelemente dort getragen sein kann.

An den beiden seitlich über den zentralen Stegabschnitt 74 hervorstehenden Bereichen tragen die Achsen 70 aus separaten Teilen aufgebaute, beispielsweise aufgesteckte Rollbereiche 96', 96", beispielsweise gebildet durch Metallhülsen oder dergleichen. Auch hier findet also die Abrollbewegung im Übergang zwischen den Achsen 70 und dem jeweils zugeordnten Rolllager bzw. im Übergang zwischen den Rollbereichen 96' und 96" und der Abstützfläche 58 statt. Die zentral positionierten Rolllager 90 sind durch den zentralen Stegabschnitt 75 des Abstützelementenkörpers 64 und die beidseits desselben positionierten Abdeckplatten 98, 100 wieder vollständig gekapselt.

Die in den Fig. 9 und 10 gezeigten Ausgestaltungsvarianten weisen den Vorteil auf, dass aufgrund der Tatsache, dass im Allgemeinen die Rolllager 74, 76 bzw. 90 einen größeren Außendurchmesser aufweisen werden als die zugeordneten Achsen 70, bereits durch das Abstützen der Rollorgane 68 über die Rolllager am Abstützelementenkörper 64 eine deutlich geringere Flächenpressung erlangt werden kann. Dies ist auch der Grund, warum beispielsweise in der Ausgestaltungsform gemäß Fig. 10 keine zusätzlichen Trageelemente gezeigt sind, über welche die Abstützung erfolgt.

## Patentansprüche

1. Abstützelement zur Abstützung eines elastisch verformbaren Dämpferelements (24) einer Dämpferelementenanordnung (26) eines Torsionsschwingungsdämpfers (10) an einer Primärseite (12) oder/und einer Sekundärseite (28) des Torsionsschwingungsdämpfers (10) oder an einem weiteren elastisch verformbaren Dämpferelement (24), umfassend eine Rollenanordnung (66), welche an einem Abstützelementenkörper (64) getragen ist und an einer Abstützfläche (58) des Torsionsschwingungsdämpfers (10) bewegbar ist, wobei die Rollenanordnung (66) wenigstens ein über wenigstens ein Trageelement (72) an dem Abstützelementenkörper (64) getragenes Rollorgan (68) umfasst,
**dadurch gekennzeichnet,**
**dass** das wenigstens eine Rollorgan (68) eine Achse (70) und an der Achse (70) wenigstens ein Rolllager (74, 76; 90) umfasst.

2. Abstützelement nach Anspruch 1,
**dadurch gekennzeichnet,**
**dass** die Achse (70) des wenigstens einen Rollorgans (68) an dem Abstützelementenkörper (64) über das wenigstens eine Trageelement (72) getragen ist und dass ein Lageraußenring (78) des wenigstens einen Rolllagers (68) zur Bewegung an der Abstützfläche (58) ausgebildet ist.

3. Abstützelement nach Anspruch 1,
**dadurch gekennzeichnet,**
**dass** ein Lageraußenring (78) des wenigstens einen Rolllagers (74, 76; 90) an dem Abstützelementenkörper (64) über das wenigstens eine Trageelement (72) getragen ist, und dass die Achse (70) zur Bewegung an der Abstützfläche (58) ausgebildet ist.

4. Abstützelement nach einem der Ansprüche 1 bis 3,
**dadurch gekennzeichnet,**
**dass** ein Trageelement (72"') mehreren Rollorganen zugeordnet ist.

## Claims

1. Supporting element for supporting an elastically deformable damper element (24) of a damper element arrangement (26) of a torsional vibration damper (10) on a primary side (12) and/or a secondary side (28) of the torsional vibration damper (10) or on a further elastically deformable damper element (24), comprising a roller arrangement (66) which is carried on a supporting-element body (64) and can be moved on a supporting face (58) of the torsional vibration damper (10), the roller arrangement (66) comprising at least one rolling element (68) which is carried on the supporting-element body (64) via at least one carrying element (72), **characterized in that** the at least one rolling element (68) comprises an axle (70) and at least one rolling bearing (74, 76; 90) on the axle (70).

2. Supporting element according to Claim 1, **characterized in that** the axle (70) of the at least one rolling element (68) is carried on the supporting-element body (64) via the at least one carrying element (72), and **in that** a bearing outer ring (78) of the at least one rolling bearing (68) is configured for movement on the supporting face (58).

3. Supporting element according to Claim 1, **characterized in that** a bearing outer ring (78) of the at least one rolling bearing (74, 76; 90) is carried on the supporting-element body (64) via the at least one carrying element (72), and **in that** the axle (70) is configured for movement on the supporting face (58).

4. Supporting element according to one of Claims 1 to 3, **characterized in that** a carrying element (72''') is assigned to a plurality of rolling elements.

## Revendications

1. Elément d'appui pour supporter un élément d'amortissement (24) déformable élastiquement d'un agencement d'éléments d'amortissement (26) d'un amortisseur de vibrations torsionnelles (10) sur un côté primaire (12) et/ou un côté secondaire (28) de l'amortisseur de vibrations torsionnelles (10) ou sur un autre élément d'amortissement (24) déformable élastiquement, comprenant un agencement de rouleaux (66), qui est porté sur un corps d'élément d'appui (64) et qui peut être déplacé sur une surface de support (58) de l'amortisseur de vibrations torsionnelles (10), l'agencement de rouleaux (66) comprenant au moins un organe de rouleau (68) porté par le biais d'au moins un élément porteur (72) sur le corps d'élément d'appui (64),
**caractérisé en ce que**
l'au moins un organe de rouleau (68) comprend un axe (70) et au moins un palier à rouleaux (74, 76 ; 90) sur l'axe (70).

2. Elément d'appui selon la revendication 1,
**caractérisé en ce que**
l'axe (70) de l'au moins un organe de rouleau (68) est porté sur le corps d'élément d'appui (64) par le biais de l'au moins un élément porteur (72) et **en ce qu'**une bague extérieure de palier (78) de l'au moins un palier à rouleaux (68) est réalisée pour assurer le mouvement sur la surface d'appui (58).

3. Elément d'appui selon la revendication 1,
**caractérisé en ce**
**qu'**une bague extérieure de palier (78) de l'au moins un palier à rouleaux (74, 76 ; 90) est portée sur le corps d'élément d'appui (64) par le biais de l'au moins un élément porteur (72), et en ce que l'axe (70) est réalisé pour assurer le mouvement sur la surface d'appui (58).

4. Elément d'appui selon l'une quelconque des revendications 1 à 3,
**caractérisé en ce que**
l'on associe plusieurs organes de rouleaux à un élément porteur (72"').
